# EUROPEAN PATENT APPLICATION

(11) **EP 1 464 378 A1**
(43) Date of publication of application: **06.10.2004**
(21) Application number: 04006400.8
(22) Date of filing: 17.03.2004
(51) Int. Cl.: B01D 63/10, B01D 65/00, B01D 65/08

(54) **Spiral separation membrane element**

(30) Priority: 20.03.2003 JP 2003077926
(71) Applicant: NITTO DENKO CORPORATION, Osaka (JP)
(72) Inventor: Hirokawa, Mitsuaki, c/o Nitto Denko Corp., Ibaraki-shi, Osaka (JP); Ando, Masaaki, c/o Nitto Denko Corp., Ibaraki-shi, Osaka (JP); Chikura, Shinichi, c/o Nitto Denko Corp., Ibaraki-shi, Osaka (JP); Ishihara, Satoru, c/o Nitto Denko Corp., Ibaraki-shi, Osaka (JP)
(74) Representative: Grünecker, Kinkeldey, Stockmair & Schwanhäusser Anwaltssozietät

(57) **Abstract**

A spiral separation membrane element which can attain a reduced pressure loss in the permeation-side passage and is effective especially when the feed-side pressure is low, is disclosed. The spiral separation membrane element comprises a perforated core tube and, wound therearound, one or more separation membranes, one or more feed-side passage materials, and one or more permeation-side passage materials, wherein the permeation-side passage materials each have warps 1 extending almost parallel with the direction of flow of a permeated liquid and wefts 2 fixed to the warps 1, a ratio of a pitch (width of each warp + distance between the opposed sides of adjacent warps) to a distance between the opposed sides of adjacent warps (w2/w1) is 1.1/1 to 3/1, and a ratio of a thickness of the passage material to a distance between the opposed sides of adjacent warps (t/wl) is 0.25/1 to 1.25/1.

## Description

### FIELD OF THE INVENTION

The present invention relates to a spiral separation membrane element for separating ingredients suspended or dissolved in liquids More particularly, the present invention relates to a spiral separation membrane element having a built-in permeation-side passage material capable of attaining a lower pressure loss on the permeation side than in related-art techniques

### DESCRIPTION OF THE RELATED ART

Conventional spiral separation membrane elements have a structure comprising a perforated core tube and, wound therearound, one or more separation membranes, one or more feed-side passage materials, and one or more permeation-side passage materials. The permeation-side passage materials which have been mainly used are ones having surfaces with no recesses or protrusions. This structure has an advantage that the degree of the reduction in cross-sectional area which is caused when the feed-side pressure is high and the membrane is hence pushed against the permeation-side passage material can be decreased.

However, the permeation-side passage materials having that structure have had the following disadvantage. The effective passage sections have a low porosity and, hence, a sufficient effective passage cross-sectional area cannot be secured Consequently, when the feed-side pressure is low or the permeated water flow rate is high, the permeation-side passage has an increased pressure loss to reduce the performance of the separation membrane element Because of this, a net-like passage material having surface recesses and protrusions is employed as a permeation-side passage material in reverse osmosis membrane elements which are operated at a relatively low pressure. With respect to the use of this net-like passage material, a measure in minimizing the influence of the feed-side pressure has been proposed which comprises interposing a cloth between the membrane and the permeation-side passage material to secure a passage section (see, for example, JP-A-09-141067 and JP-A-2000-350922).

However, as a result of the interposition of a cloth between the membrane and the permeation-side passage material, the volume of that space in the element which is available for membrane incorporation therein decreases accordingly. The effective membrane area thus decreases and the performance of the separation membrane element decreases. Conversely, in the case where a cloth is incorporated without changing the effective membrane area in an element, the permeation-side passage comes to have an effective cross-sectional area reduced by an amount corresponding to the cloth, resulting in an increased pressure loss in the permeation-side passage.

On the other hand, in the case where a spiral separation membrane element is used for applications such as clarification, the feed-side pressure is low and the permeated water flow rate is high Consequently, the above-described pressure loss in the permeation-side passage exerts considerable influences on the performance of the separation membrane element When the feed-side pressure is low, the permeation-side passage material is not highly required to have the function of maintaining a permeation-side passage during separation

### SUMMARY OF THE INVENTION

Accordingly, an object of the present invention is to provide a spiral separation membrane element which can attain a reduced pressure loss in the permeation-side passage and is effective especially when the feed-side pressure is low

The present inventors made intensive investigations on the thickness and pitches of the wefts and warps of permeation-side passage materials in order to accomplish the above object. As a result, it has been found that the object can be accomplished by regulating the relationship among the thickness, pitches, and passage-material thickness so as to be within a given range The invention has been achieved based on this finding.

The present invention provides a spiral separation membrane element comprising a perforated core tube and, wound therearound, one or more separation membranes, one or more feed-side passage materials, and one or more permeation-side passage materials, wherein the permeation-side passage materials each have warps extending almost parallel with the direction of flow of a permeated liquid and wefts fixed to the warps, a ratio of a pitch (width of each warp + distance between the opposed sides of adjacent warps) to a distance between the opposed sides of adjacent warps is 1.1/1 to 3/1, and a ratio of a thickness of the passage material to the distance between the opposed sides of adjacent warps is 0.25/1 to 1.25/1

The term "thickness of the passage material" used herein means a thickness of each warp/weft intersection.

According to the present invention, since the width of each warp in each permeation-side passage material is smaller than the distance between the opposed sides of adjacent warps in the passage material, the permeation-side passage material can have an increased effective passage cross-sectional area Furthermore, since the distance between the opposed sides of adjacent warps is larger than the thickness of the passage material, the permeation-side passage material can retain the increased effective passage cross-sectional area and have the intact function of maintaining a permeation-side passage while withstanding the feed-side pressure As a result, a spiral separation membrane element can be provided which is capable of attaining a reduced loss in the permeation-side passage and is effective especially when the feed-side pressure is low.

In this spiral separation membrane element, the ratio of the height of each warp to the thickness of the passage material is preferably 10/11 to 30/31. In this case, the proportion of the warp height has increased and the space between warps has become larger, whereby the permeation-side passage can have an even larger effective passage cross-sectional area.

### BRIEF DESCRIPTION OF THE DRAWINGS

Fig. 1A is a bottom view showing one example of the permeation-side passage materials in the spiral separation membrane element according to the present invention;
Fig. 1B is a slant view showing one example of the permeation-side passage materials in the spiral separation membrane element according to the present invention; and
Fig. 2 is a graphic presentation showing the relationship between flow rate and pressure loss in the Example in the case where ratio of the distance between adjacent warps to the distance between adjacent wefts was changed

In the drawings:
1 : warp bundle
1a : warp
2 : weft
w1 : distance between the opposed sides of adjacent warps
w2 : pitch
h : warp height
t : passage material thickness

### DETAILED DESCRIPTION OF THE INVENTION

The present invention is described in detail below by reference to the accompanying drawings.

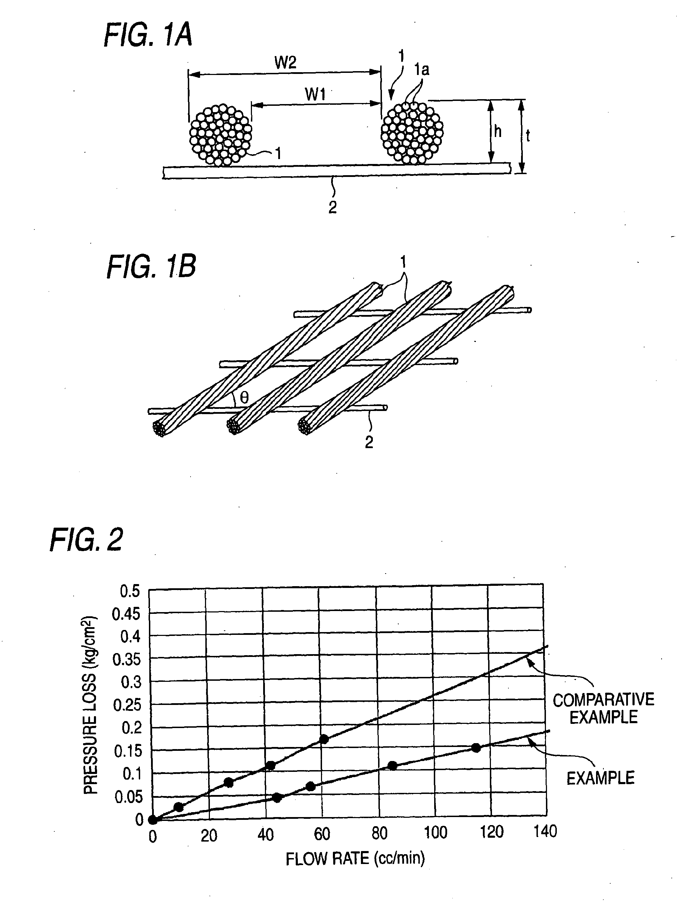

Fig. 1A is a bottom view showing one example of the permeation-side passage materials in the spiral separation membrane element according to the present invention, and Fig. 1B is a slant view showing one example of the permeation-side passage materials in the spiral separation membrane element according to the present invention

The spiral separation membrane element of the present invention has a structure comprising a perforated core tube and, wound therearound, one or more separation membranes, one or more feed-side passage materials, and one or more permeation-side passage materials. This type of membrane elements is described in detail in JP-A-09-141067 and JP-A-2000-350922. With respect to components other than the permeation-side passage materials, any conventional separation membranes, feed-side passage materials, core tubes, and the like can be used For example, in the case where two or more feed-side passage materials and two or more permeation-side passage materials are used, the membrane element has a structure in which two or more membrane leaves have been wound around a core tube

In the present invention, the permeation-side passage materials have warps 1 extending almost parallel with the direction of flow of a permeated liquid and wefts 2 and fixed to the warps 1 The fixing of the wefts 2 to the warps 1 can be accomplished by fusion bonding, adhesion, etc The warps 1 and the wefts 2 may be multifilament yarns or monofilament yarns However, from the standpoint of obtaining a larger passage area, the warps 1 are preferably multifilament yarns and the wefts 2 are preferably monofilament yarns

In the case where multifilament yarns are used as the warps 1, each yarn is preferably twisted, fusion-bonded, or otherwise treated so as to have a structure which is difficult to be deformed by the pressure on the feed side In Fig. 1A, 1a is a warp constituting a warp bundle 1. This fusion-bonding of the warps 1 may be conducted simultaneously with the fixing of the wefts 2 It is also possible to subject the warps 1 to heat setting and thereby make them have a section of a shape close to square or rectangle. The warps 1 can be thus made to have a structure which is difficult to be deformed by the feed-side pressure, whereby a reduction in pressure loss in the permeation-side passage and the security of an effective passage cross-sectional area can be reconciled in a more preferred manner

In the permeation-side passage materials, the ratio of the pitch (width of each warp + distance between the opposed sides of adjacent warps) to the distance between the opposed sides of adjacent warps (w2/w1) is 1.1/1 to 3/1, and preferably 1.5/1 to 2.5/1. In case where w2/w1 is smaller than the lower limit of that range, the warps have too small a width and the function of maintaining a permeation-side passage while withstanding the feed-side pressure becomes insufficient In case where w2/w1 is larger than the upper limit of that range, the warps have too large a width and, hence, the permeation-side passage has a reduced effective passage cross-sectional area Namely, in the present invention, the width of the warps 1 also is reduced as much as possible to increase the cross-sectional area through which a permeated liquid flows [(passage cross-sectional area) = (distance between the opposed sides of adjacent warps) × (depth of valley)]. It is important here that the permeation-side passage cross-sectional area be increased without increasing the thickness This is because the larger the thickness, the smaller the membrane area in the separation membrane element.

Consequently, in the permeation-side passage material, the ratio of the thickness of the passage material to the distance between the opposed sides of adjacent warps (t/w1) is 0.25/1 to 1.25/1, and preferably 0.3/1 to 1.0/1 In case where t/w1 is smaller than the lower limit in that range, the distance between the opposed sides of adjacent warps is too long and the function of maintaining a permeation-side passage while withstanding the feed-side pressure becomes insufficient. In case where t/w1 is larger than the upper limit in that range, the distance between the opposed sides of adjacent warps is too short and, hence, the permeation-side passage has a reduced effective passage cross-sectional area.

In the present invention, each permeation-side passage material has a structure with recesses and protrusions. Despite this, a reduced pressure loss on the permeation side can be attained without interposing a cloth. The permeation-side passage material is apt to exhibit its performance when used in a spiral separation membrane element for clarification, although this does not limit applications thereof The structure thereof has warps (protrusions) extending parallel with the direction of flow of a permeated liquid and has valleys (recesses) which are made as deep as possible Ideally, the thickness of the permeation-side passage material is made close to the depth of the valleys. Consequently, the ratio of the height of each warp in the permeation-side passage material to the thickness of the passage material (h/t) is preferably 10/11 to 30/31. Namely, the diameter of the wefts is regulated to about 1/10 to 1/30 the diameter of the warps.

Specifically, the warp diameter is preferably 350-600 µm and the weft diameter is preferably 20-50 µm. Furthermore, the warps preferably have a width of 400-800 µm and a height of 350-600 µm, and the distance between the opposed sides of adjacent warps w1 is preferably 0.3-1.5 mm

On the other hand, the distance between the opposed sides of adjacent wefts is preferably 200-1,000 µm, and more preferably 300-500 µm In case where the distance between the opposed sides of adjacent wefts is longer than the upper limit in that range, the permeation-side passage material tends to have a reduced strength, making it difficult to stably maintain a passage. In case where the distance between the opposed sides of adjacent wefts is shorter than the lower limit in that range, flow resistance tends to increase.

The spiral separation membrane element of the invention can be utilized in any of filtration techniques such as reverse osmosis filtration, ultrafiltration, and microfiltration. However, the permeation-side passage materials described above exhibit their effects especially when the feed-side pressure is low as in membrane elements mainly for clarification. Specifically, the permeation-side passage materials are useful when the pressure difference between the feed-side passage and the permeation-side passage is 0.01-0.5 MPa

Examples of the material of the permeation-side passage materials include resins such as polypropylene, polyethylene, polyesters, e g, poly(ethylene terephthalate) (PET), and polyamides, natural polymers, and rubbers However, it is preferred to use a resin such as a polyester.

Two or more kinds of wefts 2 differing in angle may be used Wefts 2 may be arranged so as to intersect other wefts 2 to form a diaper pattern In this case, it is preferred to arrange the wefts 2 so that the intersections of wefts 2 alone are located in positions different from those of the intersections of a weft 2 and a warp 1.

The thickness-direction arrangement of warps 1 and wefts 2 is preferably such that all the wefts 2 are disposed on one side of the warps 1 arranged, as shown in Figs 1 A and 1B This structure has the effects of securing a passage section and reducing the resistance of the permeation-side passage material.

The present invention is described in more detailed by reference to the following Example, which specifically shows the constitution and effects of the present invention.

### EXAMPLE

Using multifilament yarns (filament diameter. 35 µm, number of filaments twisted: 40 filaments × 2, height: 0.35 mm, width: 0 5 mm) as warps and monofilament yarns (diameter: 35 µm) as wefts, a polyester net used as a permeation-side passage material in the present invention (see Fig. 1) was produced by thermally fusion-bonding the yarns at intersections thereof so as to result in a passage material thickness of 0.39 mm. In this net, the pitch (width of each warp + distance between the opposed sides of adjacent warps) was 1.7 mm, and the distance between the opposed sides of adjacent warps was 1.2 mm (ratio: 1.4/1). The ratio of the passage material thickness to the distance between the opposed sides of adjacent warps was 0.3/1, and the distance between the opposed sides of adjacent wefts was about 0.5 mm. Furthermore, the angle θ between each warp and the wefts intersecting the same was 90±10°. This net was set on a parallel flat cell (C10-T; passage width 35 mm, passage length: 145 mm), and pure water was passed therethrough to measure the flow rate and pressure loss The results obtained are shown in Fig. 2

### COMPARATIVE EXAMPLE

A polyester net was produced in the same manner as in Example 1, except that the ratio of the pitch to the distance between the opposed sides of adjacent warps was changed to 3.9/1 while maintaining the same passage material thickness (0.39 mm), and that the ratio of the passage material thickness to the distance between the opposed sides of adjacent warps was changed to 1.8/1 This net was set on a parallel flat cell (C10-T; passage width: 35 mm, passage length 145 mm), and pure water was passed therethrough to measure the flow rate and pressure loss The results obtained are shown in Fig. 2.

As shown in Fig. 2, the passage material obtained in the Example could attain a pressure loss reduced to about a half of that for the conventional passage material obtained in the Comparative Example.

It should further be apparent to those skilled in the art that various changes in form and detail of the invention as shown and described above may be made. It is intended that such changes be included within the spirit and scope of the claims appended hereto.

This application is based on Japanese Patent Application No. 2003-077926 filed March 20, 2003, the disclosure of which is incorporated herein by reference in its entirety.

## Claims

1. A spiral separation membrane element comprising a perforated core tube and, wound therearound, one or more separation membranes, one or more feed-side passage materials, and one or more permeation-side passage materials, wherein the permeation-side passage materials each have warps extending almost parallel with the direction of flow of a permeated liquid and wefts fixed to the warps, a ratio of the pitch (width of each warp + distance between the opposed sides of adjacent warps) to a distance between the opposed sides of adjacent warps is 1.1/1 to 3/1, and a ratio of a thickness of the passage material to a distance between the opposed sides of adjacent warps is 0.25/1 to 1.25/1.

2. The spiral separation membrane element as claimed in claim 1, wherein the ratio of the height of each warp to the thickness of the passage material is 10/11 to 30/31

3. The spiral separation membrane element as claimed in claim 1, wherein the ratio of the pitch (width of each warp + distance between the opposed sides of adjacent warps) to a distance between the opposed sides of adjacent warps is 1.5/1 to 2.5/1

4. The spiral separation membrane element as claimed in claim 1, wherein the ratio of a thickness of the passage material to a distance between the opposed sides of adjacent warps is 0.3/1 to 1.0/1

5. The spiral separation membrane element as claimed in claim 1, wherein the warp has a diameter of 350-600 µm, and the weft has a diameter of 20-50 µm

6. The spiral separation membrane element as claimed in claim 1, wherein a distance between the opposed sides of adjacent warps is 0.3-1.5 mm

7. The spiral separation membrane element as claimed in claim 1, wherein a distance between the opposed sides of adjacent wefts is 200-1,000 µm
